# EUROPEAN PATENT SPECIFICATION

(11) **EP 2 909 774 B1**
(45) Date of publication and mention of the grant of the patent: **10.07.2019**
(21) Application number: 13847180.0
(22) Date of filing: 17.10.2013
(51) Int. Cl.: G06F 21/60, G06F 21/12, G06F 13/12, G06F 1/32

(54) **STORING AND ACCESSING LICENSING INFORMATION IN OPERATING SYSTEM-INDEPENDENT STORAGE**
SPEICHERN UND ABRUFEN VON LIZENZIERUNGSINFORMATIONEN BEI EINER BETRIEBSSYSTEMUNABHÄNGIGEN SPEICHERUNG
ENREGISTREMENT D'INFORMATIONS DE LICENCE ET ACCÈS À DES INFORMATIONS DE LICENCE DANS UN MODULE DE STOCKAGE INDÉPENDANT DU SYSTÈME D'EXPLOITATION

(30) Priority: 18.10.2012 US 201213654568
(43) Date of publication of application: 26.08.2015
(73) Proprietor: McAfee, LLC, Santa Clara, CA 95054 (US)
(72) Inventor: WOOD, Roger, Portland, Oregon 97210 (US); REBAUM, Jens, Portland, OR 97229 (US)
(74) Representative: Goddar, Heinz J.
(86) International application number: PCT/US2013/065539
(87) International publication number: WO 2014/062979

(56) References cited:
- EP-A2- 1 946 238
- US-A1- 2005 289 072
- US-A1- 2007 162 955
- US-A1- 2008 091 900
- US-A1- 2008 256 349
- US-A1- 2009 063 756
- US-A1- 2009 323 941
- US-A1- 2010 095 125
- "Intel Active Management Technology", , 30 June 2008 (2008-06-30), XP055117302, Retrieved from the Internet: URL:https://software.intel.com/sites/defau lt/files/9d/f3/17992-intel_amt_overview.pd f [retrieved on 2014-05-09]
- "The All New 2010 Intel Core(TM) vPro(TM) Processor Family: Intelligence that Adapts to Your Needs", , 1 January 2010 (2010-01-01), pages 1-28, XP055117059, Retrieved from the Internet: URL:http://www.globalplatform.org/specific ationsdevice.asp [retrieved on 2014-05-08]

## Description

### TECHNICAL FIELD

This disclosure relates generally to the storage and utilization of licensing information that guides the operation of a software application. More particularly, but not by way of limitation, this disclosure relates to a technique to store licensing information in a secure location on a device on which the software application is installed.

### BACKGROUND ART

As is known by those skilled in the art, software licensing and activation operations rely on the secure storage of licensing information that is used to govern the operation of a software application. Existing licensing schemes store licensing information in addressable hard disk space managed by a computer's operating system. Such licensing information may include the level of a software application that a user purchased (*e.g.,* Professional, Beginner, etc.), an expiration date for the software application, an indication that the software has been activated/registered with the application's provider, or other data that guides the application's operation. These existing techniques allow software developers to enable different functionality based on a license acquired by a user (*i.e.,* the functionality of common program code is guided by the licensing information). However, the storage of licensing information within addressable hard disk space subjects the licensing information to compromise and manipulation by other applications and/or users which can significantly affect the operation of the licensed software. It would be beneficial to store licensing information in a local storage location that is more secure from compromise or manipulation.

"Intel Active Management Technology Overview", Rel. 4.0.3 (June 2008) describes the Intel AMT capability which can be embedded in Intel-based platforms. Intel AMT operates independently of the platform processor and operating system. Remote platform management applications can access Intel AMT securely, even when the platform is turned off, as long as the platform is connected to line power and to a network.

US 2009/0323941 A1 describes techniques for software copy protection via protected execution of applications. Procedures verify whether a software container is utilizing protected memory and is associated with a specific platform. Specifically, a local license proxy server executes on a dedicated controller such as an Intel Management Engine. The local license proxy server negotiates with a remote server for a license and the remote server may issue a license to the local license proxy server. The remote server provides the proxy with authorization to allow a protected software to be used as per a negotiated license. Negotiation and provisioning of the license to the remote server proxy may be carried out over a trusted channel established either in-band or out-of-band. The local license proxy server may then allow the contents of a software container to be executed in accordance with the negotiated license.

EP 1 946 238 A2 describes techniques for providing operating system independent digital rights management. A request can be made for data, which can be monitored by a security module. The security module is independent of a host operating system and manages digital rights for the requested data. The security module may classify the data and determine a security policy based on the data classification. Policy may be stored locally or remotely.

US 2007/0162955 A1 describes a mechanism for operating system licensing and verification. A computer system includes a chipset to access one or more partitioned regions of a storage device and a network controller coupled to the chipset. The network controller includes a manageability engine to enforce policies as conditions for accessing each of the one or more partitioned regions of the storage device. During startup there is a determination as to whether license or integrity updates are available for the system. If updates are available, a remote authority is contacted via a network coupled to the network controller.

### BRIEF DESCRIPTION OF THE DRAWINGS

Figure 1 is a block diagram that illustrates a device and a management server in accordance with one embodiment.
Figure 2 is a flowchart that illustrates a licensing information provisioning process in accordance with one embodiment.
Figure 3 is a flowchart that illustrates a licensing information utilization process in accordance with one embodiment.
Figure **4** is a communication flow diagram that illustrates the exchange of information between a user device, a management server, and a software provider in accordance with one embodiment.
Figure **5** is a block diagram of an illustrative electronic device in accordance with one embodiment.

### DESCRIPTION OF THE EMBODIMENTS

This disclosure pertains to the storage and use of licensing information in operating-system independent storage. In general, techniques are disclosed for writing licensing information to an operating system-independent storage and later accessing that storage to determine if a requested task is supported by a valid license.

In the following description, for purposes of explanation, numerous specific details are set forth in order to provide a thorough understanding of the inventive concept. As part of this description, some of this disclosure's drawings represent structures and devices in block diagram form in order to avoid obscuring embodiments of the invention. In the interest of clarity, not all features of an actual implementation are described in this specification. Moreover, the language used in this disclosure has been principally selected for readability and instructional purposes, and may not have been selected to delineate or circumscribe the inventive subject matter, resort to the claims being necessary to determine such inventive subject matter. Reference in this disclosure to "one embodiment" or to "an embodiment" means that a particular feature, structure, or characteristic described in connection with the embodiment is included in at least one embodiment of the invention, and multiple references to "one embodiment" or "an embodiment" should not be understood as necessarily all referring to the same embodiment.

It will be appreciated that in the development of any actual implementation (as in any development project), numerous decisions must be made to achieve the developers' specific goals (*e.g.,* compliance with system- and business-related constraints), and that these goals will vary from one implementation to another. It will also be appreciated that such development efforts might be complex and time-consuming, but would nevertheless be a routine undertaking for those of ordinary skill in the art having the benefit of this disclosure.

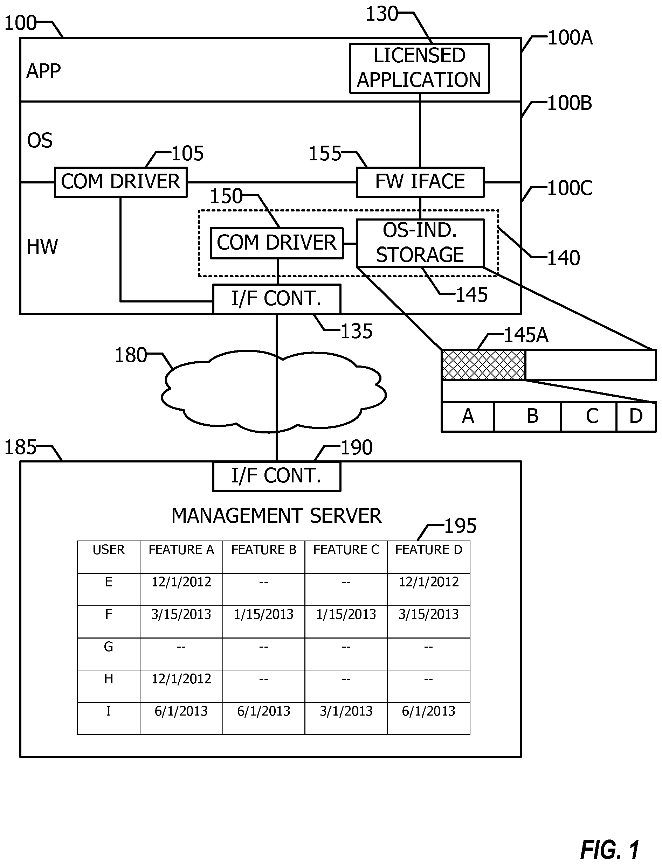

Referring to FIG. **1****,** device **100** includes application layer **100A,** operating system layer **100B,** and hardware layer **100C.** Application layer **100A** may include user level application software such as application **130.** Application **130** may be any type of software application (*e.g.*, word processing, financial planning, spreadsheet, antivirus, etc.) having certain features that require a license in order to function. The program code for each installation of application **130** may be the same (*e.g.,* may include the full functionality of application **130**), but certain features of application **130** may need to be "unlocked" by obtaining a license to utilize the features. As is known by those skilled in the art, device **100'**s operating system may reside in operating system layer **100B** and may manage portions of hardware layer **100C** and provide common functionality to applications in application layer **100A.** Hardware layer **100C** may include the physical components that form device **100.** For example, hardware layer **100C** may include one or more central processing units (CPUs) each having one or more cores, one or more memory devices, peripheral devices, etc. Of particular relevance to the instant disclosure, hardware layer **100C** may include management firmware **140.** Management firmware **140** may be located within a microcontroller in a chipset associated with a processing device of device **100** and may provide hardware-based functionality for managing device **100.** Such functionality may be provided, for example, by chipsets including Intel® Active Management Technology. (INTEL is a registered trademark of Intel Corporation.)

In the illustrated embodiment, management firmware **140** includes operating system-independent storage **145.** As used herein, operating system-independent storage refers to storage that is not mounted by a device's operating system. Thus, operating system-independent storage **145** is not part of device **100'**s file system. In one embodiment, operating system-independent storage **145** may include non-volatile storage. For example, operating system-independent storage may include flash storage. In one embodiment, operating system-independent storage **145** may be integrated within a processing device used to control device **100.**

In one embodiment, operating system-independent storage **145** may be allocated such that various portions are reserved for certain applications. For example, portion **145A** may be allocated to application **130.** Accordingly, portion **145A** may only be utilized (*e.g*., written to or read from) by application **130** or other applications authorized by application **130.** Within allocated portion **145A,** application **130** may store licensing data pertaining to various application features (*e.g.*, features A, B, C, and D). In one embodiment, the licensing data may include a simple indication of whether a particular feature is enabled (*e.g.,* a single bit), an expiration date for the feature, a number of seats for a seat license, etc. Accordingly, the amount of storage space dedicated to particular features may vary in size. Although portion **145A** has been described in terms of licensing data associated with particular features of a single application, in another embodiment, a portion of operating system-independent storage **145** may be allocated to an application that manages licensing data on behalf of multiple additional applications.

As will be described in greater detail below, operating system-independent storage **145** may be accessible to certain applications running on device **100** via management firmware interface **155.** Management firmware interface **155** may serve as a device driver that allows an application to access operating system-independent storage **145.** Consequently, application software may include program code to cause the application to access operating system-independent storage **145** to determine whether certain application functionality is supported by a current license. Operating system-independent storage **145** may also be accessible to certain remote devices via communications driver **150.** Communications driver **150** may interact with network interface controller **135** to facilitate communications via network **180,** such as, for example, with management server **185.** As will be described in greater detail below, the location of communications driver **150** within management firmware **140** may enable communications when device **100** (and thus communications driver **105**) is not in an active state.

Management server **185** may have resident thereon data store **195** that associates licensing information for various features and/or applications with user information pertaining to a user associated with the license. In the illustrated embodiment, data store **195** includes expiration date licensing information for the features of application **130** for multiple users (*e.g*., users E, F, G, H, and I). A date entered in data store **195** may indicate the date on which a current license expires for the specified feature while an entry of "--" may indicate that no license exists for the specified feature. Expiration date licensing information may be utilized by application software (*e.g.,* by accessing the information in operating system-independent storage **145**) to determine whether certain functionality should be enabled. For example, a user may purchase a license for an application or application feature that is valid for a certain time period (*e.g.,* one year). When a user attempts to utilize the licensed application or feature, the application software may compare the current date to the stored expiration date to determine whether the functionality is available under a current license. In this way application functionality may be enabled during the term of a license and blocked after the expiration of the license. Although FIG. **1** depicts expiration date licensing information in data store **195,** it will be understood that numerous additional types of licensing information may be utilized to control the operation of software applications. For example, the licensing information may indicate features that are enabled, define a maximum data transfer rate for a particular application, define a maximum number of users of a shared resource, etc.

As will be described in greater detail below, the licensing information contained in data store **195** may be communicated by a software provider (or vendor) to management server **185** when a user purchases or upgrades a software license. The licensing information for a particular device may then be written to operating system-independent storage **145** for the device on which the software is installed via network interface controller **190** over network **180.** Network **180** may take any form including, but not limited to, a local area network (LAN), a wide area network (WAN) such as the Internet or a combination of local and wide-area networks. Moreover, the network may use any desired technology (wired, wireless or a combination thereof) and protocol (*e.g.*, transmission control protocol, TCP).

In one embodiment, management firmware **140** may be operational regardless of the operating system and power state of device **100.** For example, management firmware **140** may operate on auxiliary power when device **100** is in powered-down or stand-by states. Consequently, operating system-independent storage **140** may be accessible to management server **185** via out of band communications over network **180** even when device **100** is powered down or when device **100'**s operating system is not active. Therefore, licensing information may be written from data store **195** to local operating system-independent storage **145** regardless of the operating state of device **100.**

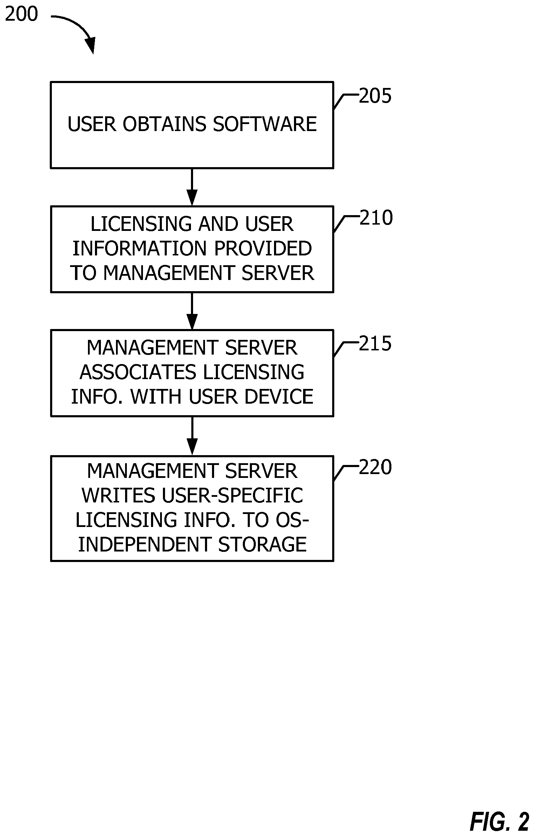

Referring to FIG. **2****,** license provisioning process **200** in accordance with one embodiment may begin when a user (such as a user of device **100**) obtains software (block **205**). As is known, software may be obtained in a variety of manners. In one embodiment, the user may obtain the software electronically, such as, for example, by downloading the software from an Internet web server provided by the software provider or a software vendor. In another embodiment, a physical copy of the software (*e.g*., a copy embodied on a tangible medium such as a CD-ROM, DVD, Universal Serial Bus (USB) memory device, etc.) may be obtained by the user.

The software obtained by the user may be associated with a particular license that "unlocks" certain software functionality. For example, a user purchasing a "Professional" version of software may receive a license that enables greater functionality than a license associated with a "Beginner" version of the same software. Thus, when a user obtains software, the software provider may associate information identifying the user with licensing information corresponding to the obtained software version or features. In one embodiment, if a user purchases an electronic copy of software from the software provider's website, the software provider may obtain the necessary information through the purchasing process. For example, during the purchasing process, information that identifies the user (*e.g*., name, credit card information, etc.) may be obtained directly by the software provider (or software vendor) and may be associated with licensing information corresponding to the purchased software. In another embodiment (such as when a physical copy of the software is obtained from an entity other than the software provider), upon installation, the software may initiate a registration process according to which user information and licensing information corresponding to the obtained software are provided to the software provider directly or through a third party (*e.g*., through a connection to the software provider's website). While license provisioning process **200** has thus far been described in terms of a user obtaining new software, it should be noted that the same process may apply to a user that renews or upgrades a license for existing software. That is, when a user obtains a new license for existing software, information identifying the user may be associated with the new license as described above and process **200** may continue as described below.

The associated user information and licensing information corresponding to the obtained software may be provided to a management server (block **210**). In one embodiment, the user and licensing information may be provided by a software provider. For example, the software provider may obtain the user and licensing information as described above and may thereafter communicate the licensing information to a management server. In one embodiment, the management server may be controlled by the software provider. In such an embodiment, the software provider may itself manage the provision of licensing information from the management server and may itself incorporate program code in the obtained software that causes the software to retrieve licensing information from the local operating system-independent storage.

In another embodiment, the management server may be operated by a third party. In such an embodiment, the third party may manage the provision of licensing information from the management server and may provide a software library that enables software providers to utilize licensing information stored in local operating system-independent storage. Thus, a software provider may simply provide current user/licensing information to the third party and may implement the third party-provided library in the obtained software such that licensing information may be obtained from local operating system-independent storage using the third party interface.

In yet another embodiment, the management server may be operated by the purchaser of the software. For example, a purchaser of a large number of software application licenses (*e.g.*, a corporate user) may maintain its own management server on a local area network that obtains updated user/licensing information (*e.g.*, from the software provider) and pushes the licensing information to local operating system-independent storage for users of the software.

After the user and licensing information have been provided to the management server, the management server may associate the licensing information with the device on which the obtained software is installed (block **215**). In one embodiment, the device on which the obtained software is installed may be identifiable directly from the user/licensing information maintained by the management server. For example, in the corporate context described above, user information may include a static Internet protocol (IP) address for a device on the same local area network as the management server. Therefore, the device may be identifiable based on information stored on the management server. In another embodiment, the device on which the obtained software is installed may not be identifiable based solely on the user/licensing information provided to the management server. For example, a personal user may install the obtained software on a device having a dynamic IP address that communicates with the management server via an Internet connection. In such an embodiment, the device may need to initiate communication with the management server (*e.g.,* via an Internet connection to the management server) in order to allow the licensing information to be associated with the device. For example, the obtained software may cause the device to periodically contact the management server and to present identifying information (*e.g.,* a user name or account access credentials) that enables the management server to match the device to the user information and, therefore, the associated licensing information. It should be noted that the program code to cause the device to contact the management server may be stored within the management firmware described above. Therefore, the device may contact the management server regardless of the device's operating state (*e.g.,* powered down or inactive operating system).

After the management server associates licensing information with a particular device, the management server may write the licensing information to local operating system-independent storage on the device (block **220**). In one embodiment, write access to the operating system-independent storage may require write credentials. In such an embodiment, a copy of the write credentials may be stored within the operating system-independent storage and write access may be granted only to an entity that presents matching credentials. For example, a software provider that controls its own management server may obtain a write certificate from a third party certificate provider and may include a copy of the write certificate in software that the provider supplies. A copy of the write certificate may be stored in the operating system-independent storage for comparison to the write certificate presented by the management server upon an attempt by the management server to write to the operating system-independent storage. In such an embodiment, the copy of the write certificate provided with the software may be provided in an encrypted format. Similarly, if a software provider utilizes the services of a third party to provision licensing information, a copy of the third party's write certificate may be provided with copies of the software.

In one embodiment, write credentials may be valid for a single remote device. In such an embodiment, a management server may need to provide valid write credentials that match write credentials stored in the operating system-independent storage as well as self-identifying information that allows the management server to be authenticated as the entity authorized to write data based on the presented write certificate. As described above with respect to FIG. **1****,** communications driver **150** within management firmware **140** may enable communications with management server **185.** Management firmware **140** may verify the credentials presented by the management server and, upon verification, the management server may be able to write current licensing information to local operating system-independent storage **145** regardless of the state of device **100.**

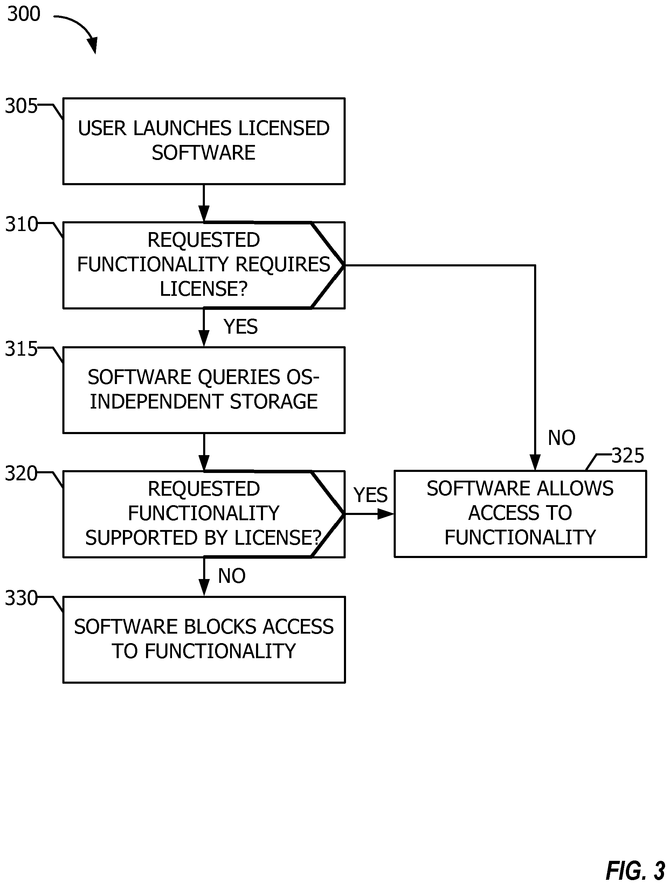

Referring to FIG. **3****,** license utilization process **300** in accordance with one embodiment may begin when a user utilizes software that incorporates functionality that is guided by licensing information stored in operating system-independent storage (block **305**). When a user attempts to use certain functionality of the software, it may be determined whether the requested functionality requires a license (block **310**). For example, certain software functionality (*e.g*., data transfer, number of users simultaneously accessing a database, etc.) may be controlled by licensing information while other functionality may be available without a license. It will be understood that this determination may be made within the software application itself. That is, where certain functionality requires a license, the software may include program code to cause licensing information to be retrieved before the functionality is enabled. If it is determined that the requested functionality requires a license (the "Yes" prong of block **310**), the software may query local operating system-independent storage for applicable licensing information (block **315**). With reference to FIG. **1****,** access to operating system-independent storage may be obtained via firmware interface **155**. In one embodiment, firmware interface **155** may function as a hardware device driver that interfaces between applications running in application layer **100A** and operating system-independent storage **145.** As noted above, operating system-independent storage **145** may be allocated such that only portions that are allocated to a particular application (or a particular process) may be accessible. In one embodiment, an application may present read credentials in order to access licensing information in operating system-independent storage. Similar to the write credentials described above, read credentials presented by an application may be compared to credentials stored in operating system-independent storage (*e.g.*, credentials created as part of the allocation of operating system-independent storage) to verify that the application is authorized to read data from the operating system-independent storage. In one embodiment, read access may also be tied to a particular process. That is, only one process executing on a processor may be capable of retrieving data from an allocated portion of operating system-independent storage. According to one embodiment of this disclosure, operating system independent storage may provide for the local storage of licensing information that is less susceptible to unauthorized access or manipulation based on the security features provided by the operating system-independent storage. Moreover, because operating system-independent storage is independent of the type of operating system in which the application is running, access to licensing information in operating system-independent storage may be uniform regardless of the operating system.

As noted above, in one embodiment, a management server that writes licensing data to operating system-independent storage may be controlled by a software provider that desires to implement the functionality of operating system-independent licensing information in software that it provides. In such an embodiment, the software provider may obtain write credentials for the management server that it controls and may obtain read credentials to allow its software to read the licensing information written to operating system-independent storage. The software provider may also implement program code in its software to access operating system-independent storage (*e.g.,* by interfacing with firmware interface **155**).

In another embodiment, as was briefly described above, a software provider desiring to utilize licensing information stored in operating system-independent storage in its software may also elect to implement this functionality via a third party. For example, rather than maintaining its own management server, managing its own read and write credentials, and implementing program code to allow its software to access operating system-independent storage, a software provider may delegate these tasks to a third party provider. In such an embodiment, the third party provider may operate a single management server to provision licensing information on behalf of multiple software applications from, possibly, multiple software vendors. In conjunction with this function, the third party may also provide a software library that allows software applications to utilize the library to access licensing information from operating system-independent storage. For example, a software library provided by the third party may include a function that causes a third party application to retrieve licensing information from operating system-independent storage on behalf of the calling application (perhaps using the third party's own read credentials). As such, a software provider may reap the benefits of improved licensing information security without participating directly in the provisioning and retrieval operations by providing licensing information to a third party and employing a third party library to access the licensing information.

After the licensing information is retrieved from the operating system-independent storage, it may be determined whether the requested software functionality is supported by the license (block **320**). Determining whether the requested functionality is supported may include performing an operation utilizing the information obtained from the operating system-independent storage. That is, the retrieved information may include data that is operated on by functionality programmed into the software to guide the behavior of the software. For example, if the retrieved information is an expiration date, program code within the software may compare a current date to the retrieved date in order to determine if the license for the requested functionality has expired. Likewise, if the retrieved information includes information concerning the number of seats purchased for a group seat license, it may be determined if the number of current users of the software is less than the number of seats as set forth in the retrieved information. Additional means of controlling a software application based on the retrieved licensing information will be recognized by those of ordinary skill in the art. If it is determined that the functionality requested by a user of the software is supported by the licensing information or that the functionality does not require a license (the "Yes" and "No" prongs of blocks **320** and **310,** respectively), the software may allow access to the requested functionality (block **325**). If, however, the requested functionality requires a license and is not supported by the retrieved licensing information (the "No" prong of block **320**), the software may block access to the functionality (block **330**). If requested functionality is blocked, the software may inform the user that the requested functionality requires a license and that the required license has not been obtained, has expired, or is otherwise defective. The software may also allow the user to obtain the required license such that the functionality may be enabled.

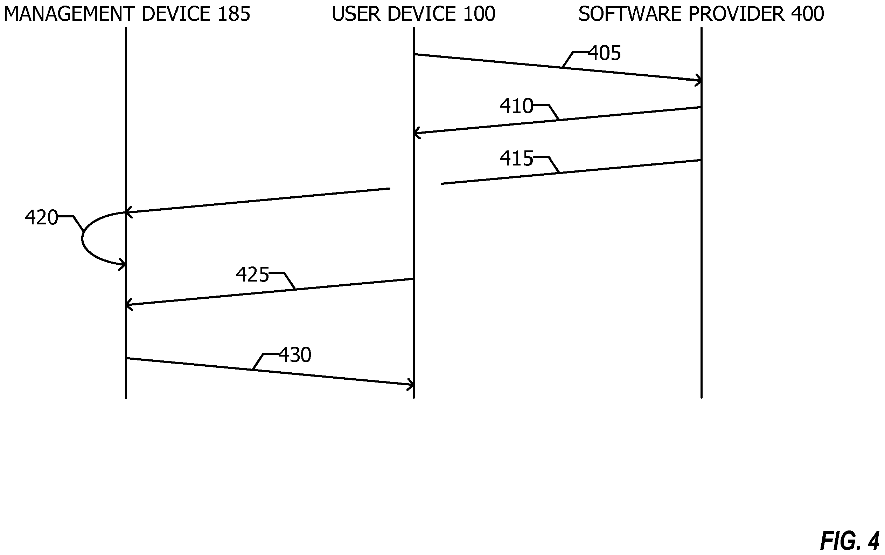

Referring to FIG. **4****,** a communication flow diagram illustrates the flow of information in accordance with one embodiment of license provisioning process **200.** User device **100** may obtain software from software provider **400.** In conjunction with device **100** obtaining software, information identifying the user of device **100** and linking the user information with licensing information associated with the obtained software (*e.g*., version information) may be provided to software provider **400** (**405**). As described above with respect to FIG. **2****,** user and licensing information may be provided to software provider **400** as part of the purchase of the software, as part of the registration of the software, etc. The user and licensing information may be communicated from device **100** to software provider **400** via a communications network (*e.g*., a connection with the software provider's web server). The user may also provide information to software provider **400** that allows licensing information to be updated in the future. For example, the user may provide credit card information and may authorize recurring credit card charges to allow the software provider to charge the credit card in order to maintain an active license for the software. In response to the user providing the necessary identifying information, software provider **400** may provide a response to user device **100** indicating that the obtained software has been licensed (**410**). At substantially the same time, software provider **400** may provide the associated user and licensing information to management device **185** (**415**). As described above, management device **185** may be controlled by software provider **185,** the user of the obtained software, or a third party. In one embodiment, management device **185** may be a web server and may receive the information from software provider **400** via an Internet connection. In another embodiment, management device **185** may be a data server on the same local area network as device **100.** The linked user information and licensing information may be stored in a data store on management device **185** (**420**).

Device **100** may thereafter contact management device **185** (*e.g.,* via an Internet connection) to allow device **100** to be recognized as the device on which the software was installed (**425**). Communication **425** may include the user information provided to software provider **400** (and communicated to management device **185**) or some identifying information that allows device **100** to be associated with the provided user information. For example, a user name and password, credit card information, or other identification may be provided to management device **185** such that management device **185** may associate device **100** with the prior stored user information and, therefore, the linked licensing information. In one embodiment, device **100** may also provide information identifying the device (*e.g.,* a hardware identifier). In such an embodiment, management device **185** may update the data store that contains the licensing records to include a device identifier. Consequently, management device **185** may be capable of managing licensing information from a device perspective as well as a user perspective. For example, if a user installs software on a first device and licensing data is written to operating system-independent storage on the first device, if the user installs the software on a second device, management device **185** may either refuse to write the licensing information to the second device or may remove the licensing information from the first device prior to writing the information to the second device.

After device **100** is associated with the licensing information, the licensing information may be written from management device **185** to operating system-independent storage on device **100** for subsequent use by the software (**430**). As described above, the provision of licensing information from management device **185** may occur regardless of the operating state of device **100.** Thus, the storage of licensing information within local operating system-independent storage in accordance with this disclosure provides secure storage of the licensing information and allows the licensing information to be updated regardless of the state of the device.

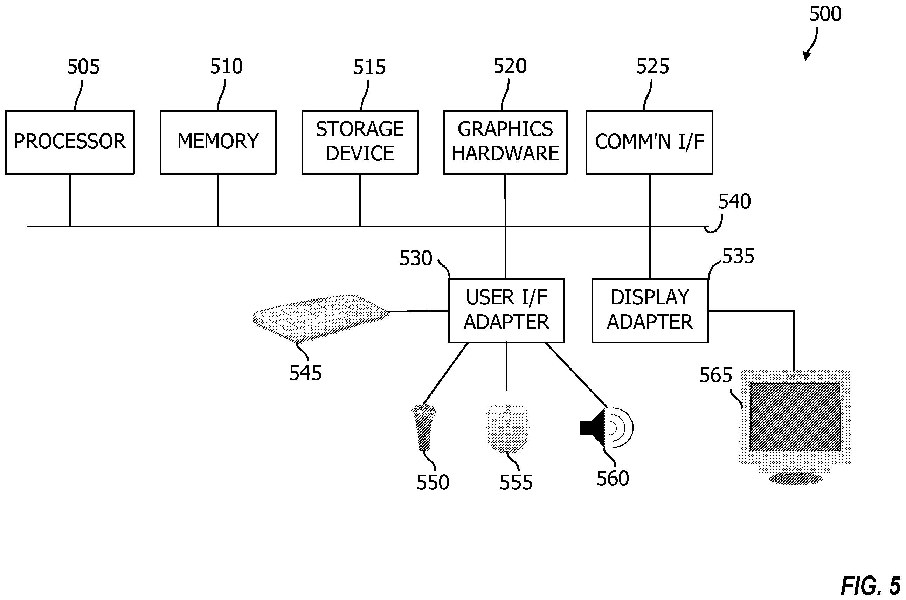

Referring to FIG. **5****,** representative device **500** *(e.g.,* a general purpose desktop computer system) includes processor **505,** memory **510,** storage **515,** graphics hardware **520,** communication interface **525,** user interface adapter **530** and display adapter **535** - all of which may be coupled via system bus or backplane **540.** Memory **510** may include one or more different types of media (typically solid-state) used by processor **505** and graphics hardware **520.** For example, memory **510** may include memory cache, read-only memory (ROM), and/or random access memory (RAM). Storage **515** may store media (*e.g.,* audio, image and video files), computer program instructions or software, preference information, device profile information, and any other suitable data. Storage **515** may include one or more non-transitory storage mediums including, for example, magnetic disks (fixed, floppy, and removable) and tape, optical media such as CD-ROMs and digital video disks (DVDs), and semiconductor memory devices such as Electrically Programmable Read-Only Memory (EPROM), and Electrically Erasable Programmable Read-Only Memory (EEPROM). Memory **510** and storage **515** may be used to tangibly retain computer program instructions or code organized into one or more modules and written in any desired computer programming language. When executed by processor **505** and/or graphics processor **520** such computer program code may implement one or more of the methods described herein. Communication interface **525** may be used to connect system **500** to a network. Illustrative networks include, but are not limited to: a local network such as a USB network; a business' local area network; or a wide area network such as the Internet. User interface adapter **530** may be used to connect keyboard **545,** microphone **550,** pointer device **555,** speaker **560** and other user interface devices such as a touch-pad and/or a touch screen (not shown). Display adapter **535** may be used to connect display **565.**

Processor **505** may include any programmable control device including, without limitation, one or more members from: the Intel Core®, Intel Atom®, Pentium® and Celeron® processor families. (INTEL CORE, INTEL ATOM, PENTIUM and CELERON are registered trademarks of Intel Corporation.) Processor **505** may also be implemented as a custom designed circuit that may be embodied in hardware devices such as application specific integrated circuits (ASICs) and field programmable gate arrays (FPGAs). Any of the devices described above (*e.g*., device **100** and management device **185**) may take the form of system **500.** Moreover, while system **500** has been described in terms of a general purpose desktop personal computer, the methods described herein may also be applicable to other types of devices having some or all of the components of system **500** (*e.g.,* a personal digital assistant (PDA), personal music player, mobile telephone, notebook, laptop or server computer, etc.). Finally, system **500** may have resident thereon any desired operating system.

The following examples pertain to further embodiments. In a first embodiment, a non-transitory program storage device, readable by a processor comprises instructions stored thereon to cause the processor to receive a request to perform an action at a local device, determine that the requested action requires a license, and request data from an operating system-independent storage on the local device to determine if a valid license for the requested action exists, where the operating system-independent storage is resident in a chipset associated with the processor.

In the above example, the operating system-independent storage may include a non-volatile flash storage device. In the above example, the instructions to cause the processor to request data from an operating system-independent storage on the local device may include instructions to cause the processor to request the data through a hardware device driver. In the above example, further instructions may cause the processor to communicate with a remote device to obtain the data. In the above example, the instructions to cause the processor to communicate with a remote device to obtain the data may be executable by the processor when the local device is in a powered-down state. In the above example, the instructions to cause the processor to request data from an operating system-independent storage on the local device may include instructions to cause the processor to present read credentials. In the above example, the instructions to cause the processor to request data from an operating system-independent storage on the local device may include instructions to cause the processor to utilize a function from a third party software library. In the above example, the instructions to cause the processor to request data from an operating system-independent storage on the local device to determine if a valid license for the requested action exists may include instructions to cause the processor to perform an operation on the data. In the above example, the data may include an expiration date and the instructions to cause the processor to perform an operation on the data may include instructions to cause the processor to determine if a current date is prior to the expiration date. In the above example, further instructions may cause the processor to perform the requested action only when it is determined that the valid license for the requested action exists. In the above example, the instructions to cause the processor to request data from an operating system-independent storage on the local device may include instructions to cause the processor to request data from a portion of the operating system-independent storage that is allocated to a software application.

In another example, a method performed by a processor includes receiving, by a software application, a request to perform an action at a local device, determining, by the software application, that the requested action requires a license, and accessing, by the software application, licensing information from an operating system-independent storage on the local device to determine if the requested action should be performed, where the operating system-independent storage is resident in a chipset associated with the processor.

In the above example, the operating system-independent storage may include a non-volatile flash storage device. In the above example, the act of accessing licensing information from an operating system-independent storage may include requesting the licensing information through a hardware device driver. In the above example, the method may further include communicating with a remote device to obtain the licensing information. In the above example, the act of communicating with a remote device to obtain the licensing information may be performed when the local device is in a powered-down state. In the above example, the act of accessing licensing information from an operating system-independent storage on the local device may include presenting read credentials. In the above example, the act of accessing licensing information from an operating system-independent storage on the local device may include calling, by the software application, a function provided in a third party library. In the above example, the act of accessing licensing information from an operating system-independent storage on the local device to determine if the requested action should be performed may include performing an operation on the licensing information. In the above example, the licensing information may include an expiration date and the act of performing an operation on the licensing information may include determining if a current date is prior to the expiration date. In the above example, the method may further include performing the requested action only when it is determined that a valid license for the requested action exists. In the above example, the act of accessing licensing information from an operating system-independent storage on the local device may include accessing a portion of the operating system-independent storage that is allocated to the software application.

In another example, a device includes a memory and a processor having a storage in an associated chipset that is independent of an operating system of the device. The processor is adapted to execute program code stored in the memory to receive a request to perform an action, determine that the requested action requires a license, and request data from the operating system-independent storage to determine if a valid license for the requested action exists.

In the above example, the operating system-independent storage may include a non-volatile flash storage device. In the above example, the program code to cause the processor to request data from the operating system-independent storage may include program code to cause the processor to request the data through a hardware device driver. In the above example, further program code may cause the processor to communicate with a remote device to obtain the data. In the above example, the program code to cause the processor to communicate with a remote device to obtain the data may be executable by the processor when the device is in a powered-down state. In the above example, the program code to cause the processor to request data from the operating system-independent storage may include program code to cause the processor to present read credentials. In the above example, the program code to cause the processor to request data from the operating system-independent storage may include program code to cause the processor to utilize a function from a third party software library. In the above example, the program code to cause the processor to request data from the operating system-independent storage to determine if a valid license for the requested action exists may include program code to cause the processor to perform an operation on the data. In the above example, the data may include an expiration date and the program code to cause the processor to perform an operation on the data may include program code to cause the processor to determine if a current date is prior to the expiration date. In the above example, further program code may cause the processor to perform the requested action only when it is determined that the valid license for the requested action exists. In the above example, the program code to cause the processor to request data from the operating system-independent storage may include program code to cause the processor to request data from a portion of the operating system-independent storage that is allocated to a software application.

In yet another example, a method includes storing, by a processor, licensing information for a software application and corresponding user information in a data store, associating, by the processor, the licensing information with a device on which the software application is installed, and writing, by the processor, the licensing information to an operating system-independent storage on the device, where the operating system-independent storage is resident in a chipset associated with a processor of the device.

In the above example, the act of writing the licensing information to an operating system-independent storage on the device may include presenting write credentials to the device. In the above example, the act of writing the licensing information to an operating system-independent storage may include writing the licensing information using out of band communications over a network connection with the device when the device is in a powered down state. In the above example, the act of writing the licensing information to an operating system-independent storage may include writing the licensing information over a network connection with the device when an operating system of the device is inactive. In the above example, the act of storing licensing information for a software application and corresponding user information in a data store may include receiving the licensing information and the corresponding user information from a provider of the software application.

It is to be understood that the above description is intended to be illustrative, and not restrictive. The material has been presented to enable any person skilled in the art to make and use the inventive concepts described herein, and is provided in the context of particular embodiments, variations of which will be readily apparent to those skilled in the art (e.g., some of the disclosed embodiments may be used in combination with each other). Many other embodiments will be apparent to those of skill in the art upon reviewing the above description. The scope of the invention therefore should be determined with reference to the appended claims, along with the full scope of equivalents to which such claims are entitled. In the appended claims, the terms "including" and "in which" are used as the plain-English equivalents of the respective terms "comprising" and "wherein."

## Claims

1. A local device including an application layer (100A), operating system layer (100B), and hardware layer (100C), wherein
the application layer (100A) includes user level application software comprising at least one software application (130) having features that require a license in order to function,
an operating system of the local device resides in the operating system layer (100B) and manages portions of the hardware layer (100C) and provides common functionality to the applications in application layer (100A), and
the hardware layer (100C) includes the physical components that form the local device (100), the hardware layer (100C) including one or more central processing units, CPUs, and the hardware layer (100C) including management firmware (140), the management firmware (140) being located within a microcontroller in a chipset associated with a processing device of the local device (100) and providing hardware-based functionality for managing the local device (100), the management firmware (100) including operating system-independent storage (145),
wherein program code is stored within the management firmware to cause the local device to periodically contact a management server, including that the local device initiates communication (425, 430) with the management server (185), when the local device (100) is in a powered-down state or the operating system is inactive, to present identifying information and to allow the management server associating licensing information with the local device and writing the licensing information to the operating system-independent storage on the local device;
the software application (130) being functionable to:
receive (305) a request to perform an action at the local device;
determine (310) that the requested action requires a license; and
access (315), via a firmware interface (155), the licensing information from the operating system-independent storage (145) on the local device to determine if a valid license for the requested action exists.

2. The device of claim 1, wherein the operating system-independent storage comprises a non-volatile flash storage device.

3. The device of claim 1, wherein to request data from an operating system-independent storage on the local device comprises to present read credentials.

4. The device of claim 1, wherein to request data from an operating system-independent storage on the local device comprises to utilize a function from a third party software library.

5. The device of claim 1, wherein to request data from an operating system-independent storage on the local device to determine if a valid license for the requested action exists comprises to perform an operation on the data.

6. The device of claim 5, wherein the data comprises an expiration date and wherein to perform an operation on the data comprises to determine if a current date is prior to the expiration date.

7. The device of claim 1, further comprising to perform the requested action only when it is determined that the valid license for the requested action exists.

8. The device of claim 1, wherein to request data from an operating system-independent storage on the local device comprises to request data from a portion (145A) of the operating system-independent storage that is allocated to a software application.

## Patentansprüche

1. Lokales Gerät beinhaltend eine Anwendungsschicht (100A), Betriebssystemschicht (100B), und Hardwareschicht (100C), wobei
die Anwendungsschicht (100A) Benutzerebene-Anwendungssoftware beinhaltet, die mindestens eine Softwareanwendung (130) mit Merkmalen umfasst, die eine Lizenz erfordern um zu funktionieren,
ein Betriebssystem des lokalen Gerätes, das in der Betriebssystemschicht (100B) residiert und Bereiche der Hardwareschicht (100C) verwaltet und den Anwendungen in der Anwendungsschicht (100A) gemeinsame Funktionalität bereitstellt, und
die Hardwareschicht (100C) die physikalischen Komponenten beinhaltet, die das lokale Gerät (100) ausmachen, wobei die Hardwareschicht (100C) eine oder mehrere zentrale Prozessoreinheiten, CPUs, beinhaltet, und die Hardwareschicht (100C) Verwaltungsfirmware (140) beinhaltet, wobei die Verwaltungsfirmware (140) innerhalb eines Microcontrollers in einem Chipset lokalisiert ist, das mit einem prozessierendem Gerät des lokalen Gerätes (100) assoziiert ist, und hardware-basierte Funktionalität zum Verwalten des lokalen Gerätes (100) bereitstellt, wobei die Verwaltungsfirmware (100) betriebssystem-unabhängigen Speicher (145) beinhaltet,
wobei Programmcode innerhalb der Verwaltungsfirmware gespeichert ist, um das lokale Gerät zu veranlassen, periodisch einen Verwaltungsserver zu kontaktieren, beinhaltend dass das lokal Gerät Kommunikation (425, 430) mit dem Verwaltungsserver (185) initiiert, wenn das lokale Gerät (100) in einem ausgeschalteten Zustand ist oder das Betriebssystem inaktiv ist, Identifizierungsinformation zu präsentieren und dem Verwaltungserver zu erlauben, Lizensierungsinformation mit dem lokalen Gerät zu assoziieren und die Lizensierungsinformation in den betriebssystem-unabhängigen Speicher auf dem lokalen Gerät zu schreiben;
wobei die Softwareanwendung (130) funktional ist zum:
Empfangen (305) einer Anforderung, eine Aktion am lokalen Gerät durchzuführen;
Bestimmen (310) dass die angeforderte Aktion eine Lizenz erfordert; und
Zugreifen (315), über ein Firmwareinterface (155), auf die Lizensierungsinformation auf dem betriebssystem-unabhängigen Speicher (145) auf dem lokalen Gerät, um zu bestimmen, ob eine gültige Lizenz für die angeforderte Aktion existiert.

2. Gerät nach Anspruch 1, wobei der betriebssystem-unabhängige Speicher ein nichtflüchtiges Flash-Speichergerät aufweist.

3. Gerät nach Anspruch 1, wobei Daten anzufordern von einem betriebssystem-unabhängigen Speicher auf dem lokalen Gerät umfasst, Lese-Credentials zu präsentieren.

4. Gerät nach Anspruch 1, wobei Daten anzufordern von einem betriebssystem-unabhängigen Speicher auf dem lokalen Gerät umfasst, eine Funktion einer von Dritten bereitgestellten Softwarebibliothek zu verwenden.

5. Gerät nach Anspruch 1, wobei Daten anzufordern von einem betriebssystem-unabhängigen Speicher auf dem lokalen Gerät, um zu bestimmen, ob eine gültige Lizenz für die angeforderte Aktion existiert, umfasst, eine Operation auf den Daten durchzuführen.

6. Gerät nach Anspruch 5, wobei die Daten ein Ablaufdatum umfassen und wobei eine Operation auf den Daten durchzuführen umfasst, zu bestimmen, ob ein gegenwärtiges Datum vor dem Ablaufdatum ist.

7. Gerät nach Anspruch 1, weiterhin umfassend, die angeforderte Aktion nur durchzuführen, wenn es bestimmt wird, dass die gültige Lizenz für die angeforderte Aktion existiert.

8. Gerät nach Anspruch 1, wobei Daten von einem betriebssystem-unabhängigen Speicher auf dem lokalen Gerät anzufordern umfasst, Daten von einem Bereich (145A) des betriebssystem-unabhängigen Speichers anzufordern, der für eine Softwareanwendung allokiert ist.

## Revendications

1. Dispositif local comprenant une couche d'application (100A), une couche de système d'exploitation (100B) et une couche matérielle (100C), dans lequel :
la couche d'application (100A) inclut un logiciel d'application de niveau utilisateur comprenant au moins une application logicielle (130) présentant des fonctions qui nécessitent une licence pour fonctionner ;
un système d'exploitation du dispositif local réside dans la couche de système d'exploitation (100B), gère des parties de la couche matérielle (100C) et fournit une fonctionnalité commune aux applications dans la couche d'application (100A) ; et
la couche matérielle (100C) inclut les composants physiques qui forment le dispositif local (100), la couche matérielle (100C) incluant une ou plusieurs unités centrales de traitement, CPU, et la couche matérielle (100C) incluant un micrologiciel de gestion (140), le micrologiciel de gestion (140) étant situé au sein d'un microcontrôleur dans un jeu de puces associé à un dispositif de traitement du dispositif local (100) et fournissant une fonctionnalité matérielle pour gérer le dispositif local (100), le micro logiciel de gestion (100) incluant une mémoire indépendante du système d'exploitation (145) ;
dans lequel un code de programme est stocké dans le micrologiciel de gestion en vue d'amener le dispositif local à contacter périodiquement un serveur de gestion, ce qui inclut l'initiation, par le dispositif local, d'une communication (425, 430) avec le serveur de gestion (185), lorsque le dispositif local (100) est dans un état hors tension ou lorsque le système d'exploitation est inactif, à présenter des informations d'identification et à autoriser le serveur de gestion à associer des informations de licence au dispositif local et à écrire les informations de licence dans la mémoire indépendante du système d'exploitation sur le dispositif local ;
l'application logicielle (130) étant exploitable de manière à :
recevoir (305) une demande de mise en oeuvre d'une action au niveau du dispositif local ;
déterminer (310) que l'action demandée nécessite une licence ; et
accéder (315), par l'intermédiaire d'une interface de micrologiciel (155), aux informations de licence, à partir de la mémoire indépendante du système d'exploitation (145) sur le dispositif local, en vue de déterminer s'il existe une licence valide pour l'action demandée.

2. Dispositif selon la revendication 1, dans lequel la mémoire indépendante du système d'exploitation comprend un dispositif de mémoire flash non volatile.

3. Dispositif selon la revendication 1, dans lequel, l'étape consistant à demander des données, à partir d'une mémoire indépendante du système d'exploitation sur le dispositif local, comprend l'étape consistant à présenter des justificatifs d'identité lus.

4. Dispositif selon la revendication 1, dans lequel, l'étape consistant à demander des données, à partir d'une mémoire indépendante du système d'exploitation sur le dispositif local, comprend l'étape consistant à utiliser une fonction provenant d'une bibliothèque de logiciels tierce.

5. Dispositif selon la revendication 1, dans lequel, l'étape consistant à demander des données, à partir d'une mémoire indépendante du système d'exploitation sur le dispositif local, en vue de déterminer s'il existe une licence valide pour l'action demandée, comprend l'étape consistant à mettre en oeuvre une opération sur les données.

6. Dispositif selon la revendication 5, dans lequel les données comprennent une date d'expiration, et dans lequel, l'étape consistant à mettre en oeuvre une opération sur les données comprend l'étape consistant à déterminer si une date actuelle est antérieure à la date d'expiration.

7. Dispositif selon la revendication 1, comprenant en outre l'étape consistant à ne mettre en oeuvre l'action demandée que lorsqu'il est déterminé que la licence valide existe pour l'action demandée.

8. Dispositif selon la revendication 1, dans lequel, l'étape de demande de données à partir d'une mémoire indépendante du système d'exploitation sur le dispositif local consiste à demander des données à partir d'une partie (145A) de la mémoire indépendante du système d'exploitation qui est affectée à une application logicielle.
